# EUROPÄISCHE PATENTSCHRIFT

(11) **EP 1 723 626 B1**
(45) Veröffentlichungstag und Bekanntmachung des Hinweises auf die Patenterteilung: **12.09.2012**
(21) Anmeldenummer: 04802802.1
(22) Anmeldetag: 24.11.2004
(51) Int. Cl.: G09F 21/04, G09F 23/06, B62B 3/14

(54) **DISPLAYELEMENT**
DISPLAY ELEMENT
ELEMENT D AFFICHAGE

(30) Priorität: 26.11.2003 DE 20318482 U
(43) Veröffentlichungstag der Anmeldung: 22.11.2006
(73) Patentinhaber: Sonnendorfer, Horst, 82178 Puchheim (DE); Wieth, Franz, 82178 Puchheim (DE)
(72) Erfinder: Sonnendorfer, Horst, 82178 Puchheim (DE); Wieth, Franz, 82178 Puchheim (DE)
(74) Vertreter: Braun-Dullaeus, Karl-Ulrich
(86) Internationale Anmeldenummer: PCT/DE2004/002593
(87) Internationale Veröffentlichungsnummer: WO 2005/052899

(56) Entgegenhaltungen:
- EP-A- 0 818 768
- WO-A-03/059715
- DE-U1- 29 813 193
- FR-A- 2 733 197

## Beschreibung

Die Erfindung betrifft ein Displayelement zum Anbringen von Werbung am Griff eines Einkaufswagens oder dergleichen, umfassend einen Grundkörper mit einer Ausnehmung zum flächigen Einlegen eines Werbeträgers, eine durchsichtige, abnehmbare Abdeckung für die Aus nehmung, sowie Befestigungselemente zum Befestigen des Displayelements an der Griffstange eines Einkaufswagens.

Ein derartiges Displayelement ist bekannt aus der WO 03/057543 A1.

Das Dokument EP 0818768 A ist als nächstliegender Stand der Technik angesehen.

Das dort beschriebene Displayelement eignet sich sehr gut zur nachträglichen Montage auf eine Griffstange eines Einkaufswagens.

Die Griffstange eines Einkaufswagens bietet einen bevorzugten Platz zum Anbringen von Werbung, da die, den Einkaufswagen verwendenden Kunden diese Werbung zwangsläufig wahrnehmen, wenn sie den Einkaufswagen ergreifen. Das Displayelement stellt die Werbebotschaft zudem großflächig dar.

Sofern an der Griffstange bereits ein weiteres Funktionselement, etwa ein Pfandschloss montiert ist, reduziert sich nach der Montages eines Displayelements der verbleibende, freie Bereich an der Griffstange jedoch in ungünstiger Weise.

Wenn ein Displayelement und Funktionselemente gemeinsam an der Griffstange montiert sind, verbleibt - insbesondere bei kleineren Einkaufswagen- nur noch ein reduzierter Bereich zum Greifen und Schieben des Einkaufswagens.

Der Benutzer ist räumlich eingeschränkt, um für seine Hand eine angenehme Position auf der Griffstange zu finden. Der noch verbleibende freie Bereich der Griffstange kann im Gesamterscheinungsbild nachteilig "zerstückelt" wirken, was wiederum einen negativen Eindruck vom Gesamtdesign des Einkaufswagens hinterlässt.

Auch lassen sich auf einem solchen "zerstückelten" Bereich der Griffstange weitere auffällige Werbebotschaften oder Firmenlogos schlecht platzieren.

Es ist daher Aufgabe der vorliegenden Erfindung, ein Displayelement zu schaffen, welches die gemeinsame Montage des Displayelements und eines oder mehrerer weiterer Funktionselemente ermöglicht und dabei einen größtmöglichen freien Bereich auf der Griffstange erzielt.

Diese Aufgabe ist durch ein Displayelement mit den Merkmalen des beigefügten Anspruchs 1 gelöst.

Vorteilhaffe Ausgestaltungen und Weiterbildungen des erfindungsgemäßen Displayelements sind in den Unteransprüchen formuliert.

Die Überlegungen, die zur Entstehung der vorliegenden Erfindung führten gingen davon aus, dass im Gehäuse des großflächigen Displayelements ein bisher noch nicht genutzter Raum vorhanden ist.

Dieser Raum kann in erfinderischer Weise zur teilweisen oder sogar vollständigen Aufnahme eines weiteren an der Griffstange befestigten Funktionselements genutzt werden.

Das Displayelement überdeckt das Funktionselement dabei in dem Maße wie es im Einzelfall nötig und/oder möglich ist.

Das Displayelement ist auch für eine Nachrüstung geeignet. Gegebenenfalls ist es hierzu nötig, ein bereits am Griff vorhandenes Funktionselement anders zu positionieren, um es dann mit dem Displayelement ganz oder teilweise zu überdecken.

Ein Ausführungsbeispiel des Displayelements gemäß der Erfindung wird im Folgenden anhand der beigefügten Zeichnungen näher erläutert und beschrieben. Es zeigen:

Figur 1 die perspektivische Ansicht des erfindungsgemäßen
Displayelements,

Figur 2 das Displayelement zusammen mit einem Funktionsteil auf einer Griffstange montiert.

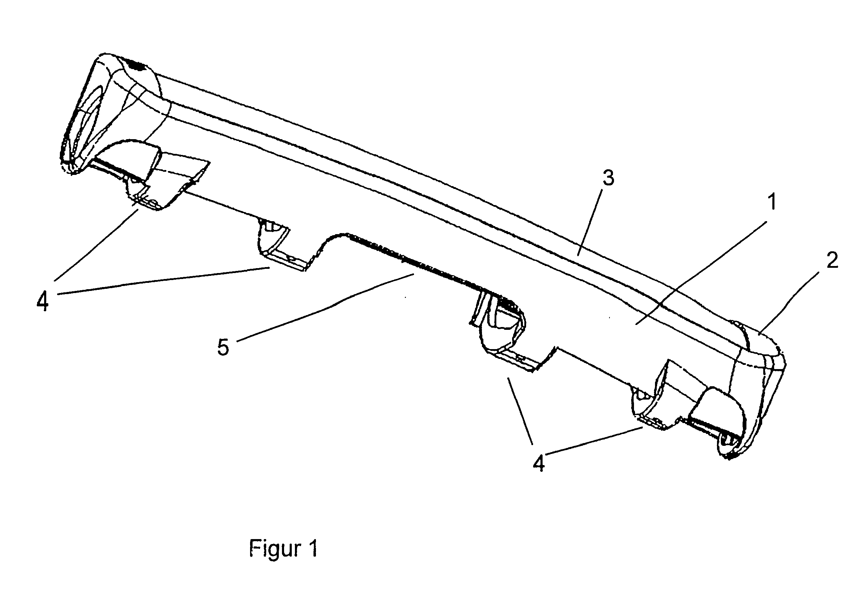

Die Figur 1 zeigt das Displayelement (1) An seiner Oberseite (2) ist das Displayelement (1) mit einer großflächigen Ausnehmung (3) zur Aufnahme eines hier nicht dargestellten Werbeträgers versehen. Die Ausnehmung (3) ist mit einer ebenfalls nicht dargestellten, durchsichtigen Abdeckung bündig abgedeckt. An der Unterseite des Displayelements (1) sind Befestigungselemente (4) vorhanden.

Eine Ausnehmung (5) schafft den Freiraum, der benötigt wird, um ein weiteres Funktionselement wie beispielsweise ein Pfandschloss zumindest teilweise mit dem Displayelement zu überdecken.

Die Befestigungselemente (4) sind der Form der Griffstange angepasst. Die Befestigungselemente (4) halten das Displayelement (1) fest und verdrehsicher an der Griffstange

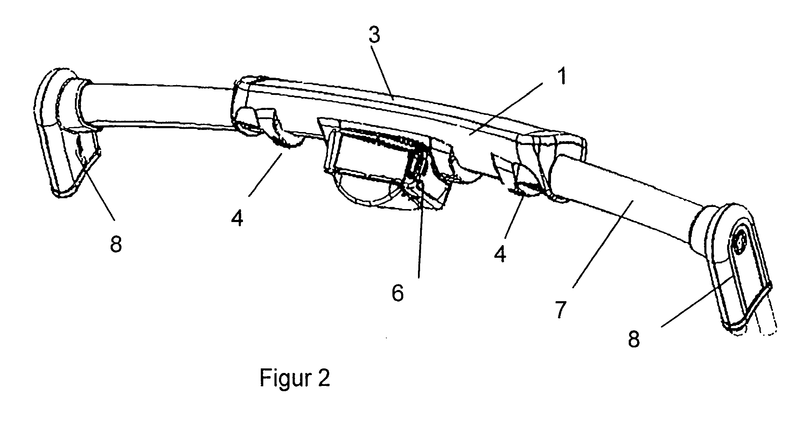

In Figur 2 ist das Displayelement (1) zusammen mit einem weiteren Funktionselement (6) auf einer Griffstange (7) montiert. Die Griffstange (7) ist über sogenannte Griffkappen (8) an einem hier nicht gezeichneten Einkaufswagen befestigt. Das Funktionselement (6), im gezeigten Beispiel ein Pfandschloss befindet sich teilweise innerhalb der Ausnehmung (5), teilweise unterhalb der Griffstange (7).

Ebenso ist es erfindungsgemäß möglich im Displayelement eine größere Ausnehmung vorzusehen, in der dann auch solche Funktionselemente Platz finden, die mehrheitlich oberhalb der Griffstange angeordnet sind.

Es ist, entsprechend angepasste Displayelemente (1) vorausgesetzt, somit vorteilhaft möglich, bestehende Griffstangen (7), auf denen bereits beliebig geformte Funktionselemente (6) montiert sind, mit einem werbewirksamen Displayelement (6) nachzurüsten und somit die gesamte Griffstange zum Werbeträger aufzuwerten.

Das Displayelement (1) mit der an den Kunden gerichteten Werbebotschaft befindet sich zentral in der Mitte der Griffstange (7) und erfährt so die gewünschte

Aufmerksamkeit. Seitlich neben dem Displayelement (1) bis hin zu den Griffkappen (8) bleibt die Griffstange (7) frei. Dies ermöglicht es dem Kunden beim Schieben des Einkaufswagens eine angenehme Haltung für seine Hände zu finden.

Das während des Einkaufens weniger wichtige Funktionselement (6)- hier ein Pfandschloss- ist optisch untergeordnet angebracht und bleibt dennoch ergonometrisch gut erreichbar.

Bei der Montage des Displayelements (1) wird zunächst das Displayelement (1) auf der Oberseite der Griffstange (7) positioniert, dann werden die Befestigungselemente (4) von unten um die Griffstange (7) gelegt und anschließend mit dem Displayelement (1) verbunden.

Sofern bereits ein Funktionselement (6) auf der Griffstange (1) vorhanden ist, erfolgt die Montage des Displayelements (1) so, dass das bereits vorhandene Funktionselement (6) innerhalb der Ausnehmung (5) liegt.

Eventuell ist es in solch einem Fall nötig, das bereits vorhandene Funktionselement (6) etwas entlang der Griffstange (7) zu verschieben, damit alle Teile symmetrisch auf der Griffstange (7) platziert sind.

Die Befestigungselemente (4) sind einstückig mit dem Displayelement (1) ausgebildet. Dann erfolgt die Montage des Displayelements (1) auf der Griffstange (7) indem das Displayelement (1) auf die Griffstange (7) von der Seite aus aufgeschoben wird. Bei dieser Ausführung ist es notwendig die Griffstange (7) vom Einkaufswagen zunächst zu lösen, um das seitliche Aufschieben zu ermöglichen.

Das Funktionsteil (6) muss hierbei dann schon während des Aufschiebens des Displayelements (1) innerhalb der Ausnehmung (5) positioniert sein, um dann gemeinsam mit dem Displayelement (1) auf die Griffstange geschoben zu werden.

## Patentansprüche

1. Displayelement zum Anbringen von Werbung am Griff eines Einkaufswagens oder dergleichen, umfassend
- einen Grundkörper mit flächigen Bereichen (3) zum Präsentieren von Werbung,
- Befestigungselemente (4) zum Befestigen des Displayelements (1) an der Griffstange (7) eines Einkaufswagens
wobei das Displayelement (1) eine Ausnehmung (5) zur teilweisen oder vollständigen Aufnahme eines weiteren, an der Griffstange (7) befestigbaren Funktionselementes (6) aufweist
**dadurch gekennzeichnet, dass**
die Befestigungselemente (4) einstückig mit dem Displayelement (1) ausgebildet sind.

2. Displayelement nach Anspruch 1,
**dadurch gekennzeichnet, dass**
die Ausnehmung (5) zur teilweisen oder vollständigen Aufnahme eines weiteren, an der Griffstange (7) befestigbaren Funktionselements (6) an der Unterseite des Displayelements (1) ausgebildet ist.

3. Displayelement nach Anspruch 1 oder 2,
**dadurch gekennzeichnet, dass**
die Ausnehmung (5) zur teilweisen oder vollständigen Aufnahme eines weiteren, an der Griffstange (7) befestigbaren Funktionselements (6) etwa in der Mitte des Displayelements (1) ausgebildet ist.

## Claims

1. A display element for attaching advertising to the handle of a shopping trolley or the like, comprising
- a basic body with planar regions (3) for presenting advertising,
- fastening elements (4) for fastening the display element (1) to the handle bar (7) of a shopping trolley,
wherein the display element (1) comprises a recess (5) for the partial or complete reception of a further function element (6) attachable to the handle bar (7),
**characterised in that**
the fastening elements (4) are formed in one piece with the display element (1).

2. The display element according to claim 1,
**characterised in that**
the recess (5) for the partial or complete reception of a further functions element (6) attachable to the handle bar (7) is formed on the underside of the display element (1).

3. The display element according to claim 1 or 2,
**characterised in that**
the recess (5) for the partial or complete reception of a further function element(6) attachable to the handle bar (7) is formed approximately in the centre of the display element (1).

## Revendications

1. Elément d'affichage pour appliquer de la publicité sur la poignée d'un chariot de supermarché ou similaire, comprenant
- un corps de base avec des zones plates (3) pour présenter la publicité,
- des éléments de fixation (4) pour fixer l'élément d'affichage (1) sur la barre de poignée (7) d'un chariot de supermarché,
dans lequel l'élément d'affichage (1) présente un évidement (5) pour recevoir partiellement ou totalement un élément fonctionnel (6) supplémentaire, pouvant être fixé sur la barre de poignée (7),
**caractérisé en ce que**
les éléments de fixation (4) sont réalisés en un seul tenant avec l'élément d'affichage (1).

2. Elément d'affichage selon la revendication 1,
**caractérisé en ce que**
l'évidement (5) renfermant partiellement ou totalement un élément fonctionnel (6) supplémentaire, pouvant être fixé sur la barre de poignée (7) est réalisé sur la face inférieure de l'élément d'affichage (1).

3. Elément d'affichage selon les revendications 1 ou 2,
**caractérisé en ce que**
l'évidement (5) renfermant partiellement ou totalement un élément fonctionnel (6) supplémentaire, pouvant être fixé sur la barre de poignée (7) est réalisé approximativement au milieu de l'élément d'affichage (1).
